# EUROPÄISCHE PATENTANMELDUNG

(11) **EP 4 057 272 A2**
(43) Veröffentlichungstag der Anmeldung: **14.09.2022**
(21) Anmeldenummer: 21200148.1
(22) Anmeldetag: 04.11.2008
(51) Int. Cl.: G09G 5/39, G09G 5/393, G07C 9/00, G06T 1/00

(54) **DOKUMENT MIT EINER INTEGRIERTEN ANZEIGEVORRICHTUNG**

(30) Priorität: 12.11.2007 DE 102007000875
(62) Teilanmeldung aus: 08848855.6
(71) Anmelder: Bundesdruckerei GmbH, 10969 Berlin (DE)
(72) Erfinder: Manfred, PAESCHKE, 16348 Wandlitz (DE); Malte, PFLUGHOEFFT, 13347 Berlin (DE); Arthur, MATHEA, 14199 Berlin (DE); Edward, SPRINGMANN, 10249 Berlin (DE); Jörg, FISCHER, 13053 Berlin (DE); Frank, FRITZE, 12487 Berlin (DE)
(74) Vertreter: Richardt Patentanwälte PartG mbB

(57) **Zusammenfassung**

Die Erfindung betrifft ein Dokument mit einer integrierten Anzeigevorrichtung (102), einem elektronischen Speicher zur Speicherung erster (106) und zweiter (107) Daten, und Ansteuerungsmitteln (104; 122, 131) zur Ansteuerung der Anzeigevorrichtung für eine Wiedergabe der ersten Daten mit einem digitalen Wasserzeichen, wobei das digitale Wasserzeichen die zweiten Daten beinhaltet.

## Beschreibung

Die Erfindung betrifft ein Dokument, insbesondere ein Wert- oder Sicherheitsdokument, mit einer integrierten Anzeigevorrichtung, ein Lesegerät und ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als so genannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus den DE 101 60 732 und DE 101 51 440 sind Displays mit elektronischen Wasserzeichen bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Dokument mit einer integrierten Anzeigevorrichtung geschaffen. Das Dokument hat einen elektronischen Speicher zur Speicherung erster und zweiter Daten. Durch Ansteuerungsmittel des Dokuments wird die Anzeigevorrichtung zur Wiedergabe der ersten Daten angesteuert, sodass ein Benutzer die Wiedergabe visuell erfassen kann. Die Ausgabe der zweiten Daten über die Anzeigevorrichtung erfolgt so, dass bei der Wiedergabe der ersten Daten ein digitales Wasserzeichen überlagert wird, welches die zweiten Daten beinhaltet.

Dies hat den Vorteil, dass die Anzeigevorrichtung neben der Wiedergabe der ersten Daten zur visuellen Erfassung durch einen Benutzer auch zur Ausgabe der zweiten Daten dient, und zwar so, dass die Ausgabe der zweiten Daten visuell durch einen Benutzer nicht wahrgenommen werden kann. Insbesondere kann hierdurch ein Sicherheitsmerkmal zum verbesserten Schutz des Dokuments gegen Fälschungen realisiert sein. Alternativ oder zusätzlich dient die Ausgabe der zweiten Daten in Form eines digitalen Wasserzeichens zur Kommunikation mit einem Lesegerät, beispielsweise zur Übertragung einer Personalisierungsinformation und/oder eines kryptographischen Schlüssels.

Digitale Wasserzeichen sind an sich aus dem Stand der Technik bekannt und werden üblicherweise drucktechnisch auf ein Dokument aufgebracht, wie es zum Beispiel aus DE 199 00 856 C2, EP 0 490 457 B1 und EP 0 961 239 A3 an sich bekannt ist.

Nach Ausführungsformen der Erfindung werden solche an sich aus der Informationstechnik bekannten Verfahren zur Erzeugung digitaler Wasserzeichen angewendet, um der Wiedergabe der ersten Daten ein digitales Wasserzeichen zu überlagern, welches die zweiten Daten beinhaltet. Diese Überlagerung kann im Bildraum oder im Frequenzraum erfolgen, wie es an sich ebenfalls aus dem Bereich drucktechnisch aufgebrachter digitalen Wasserzeichen bekannt ist. Anstelle einer drucktechnischen Aufbringung der Widergabe der ersten Daten mit dem überlagerten digitalen Wasserzeichen, wird also erfindungsgemäß die Anzeigevorrichtung für die Widergabe der ersten Daten mit dem überlagerten digitalen Wasserzeichen angesteuert.

Nach einer Ausführungsform der Erfindung handelt es sich bei dem elektronischen Speicher des Dokuments um einen Bilddatenspeicher, beispielsweise einen so genannten frame buffer. Bevor die ersten Daten in dem Bilddatenspeicher gespeichert werden, wird den ersten Daten das digitale Wasserzeichen, welches die zweiten Daten beinhaltet, überlagert. Die aus dieser Überlagerung der ersten Daten mit dem digitalen Wasserzeichen resultierenden Daten werden in dem Bilddatenspeicher zeilenweise gespeichert. Auf den Bilddatenspeicher kann eine Treiberschaltung der Ansteuerungsmittel zugreifen, um die Anzeigevorrichtung zur Wiedergabe der in dem Bilddatenspeicher gespeicherten Daten anzusteuern. Bei dieser Ausführungsform kann also die Überlagerung der ersten Daten mit dem digitalen Wasserzeichen außerhalb des Dokuments erfolgen. Erst die bereits mit dem digitalen Wasserzeichen überlagerten ersten Daten werden in den Bilddatenspeicher des Dokuments geschrieben. Diese Ausführungsform ist besonders dann geeignet, wenn sich die zweiten Daten nicht oder nur selten ändern.

Nach einer Ausführungsform der Erfindung erfolgt die Erzeugung des digitalen Wasserzeichens in dem Dokument selbst. Hierzu greifen die Ansteuerungsmittel auf die in dem elektronischen Speicher gespeicherten ersten und zweiten Daten zu, um den ersten Daten das digitale Wasserzeichen zu überlagern.

Bevorzugt wird das digitale Wasserzeichen so den ersten Daten überlagert, dass es visuell mit dem bloßen Auge nicht oder kaum wahrnehmbar ist. Ein Benutzer nimmt mit dem bloßen Auge also lediglich die Wiedergabe der ersten Daten auf der Anzeigevorrichtung wahr, ohne die ergänzende, die Wiedergabe der ersten Daten überlagernde, Wiedergabe des digitalen Wasserzeichens visuell wahrzunehmen.

Nach einer Ausführungsform der Erfindung wird das digitale Wasserzeichen nur in einem Teilbereich der Anzeigevorrichtung wiedergegeben. Dies erhöht die Fälschungssicherheit noch weiter, da ein Fälscher für die Nachstellung des Dokuments nicht wissen kann, wo sich dieser Teilbereich der Anzeigevorrichtung befindet.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die ersten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes, ein Kennzeichen, insbesondere eine amtliches Kraftfahrzeugkennzeichen, und dergleichen.

Nach einer Ausführungsform der Erfindung beinhalten die zweiten Daten eine Information, wie zum Beispiel eine Personalisierungsinformation, ein Sicherheitsmerkmal, einen kryptographischen Schlüssel, einen Fahrzeugparameter und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der zweiten Daten im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen. Diese Information wird bei der Wiedergabe der ersten Daten durch das digitale Wasserzeichen von der Anzeigevorrichtung ausgegeben.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Die Information kann teilweise oder ganz zusätzlich im Klartext auf der Anzeigevorrichtung angezeigt werden.

Nach einer Ausführungsform der Erfindung hat das Dokument einen geschützten Speicherbereich, in dem dritte Daten gespeichert sind. Ferner hat das Dokument eine Schnittstelle für einen lesenden Zugriff des Lesegeräts auf diese dritten Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die dritten Daten ist die zuvorige erfolgreiche Ausführung des kryptographischen Protokolls. Bei dem kryptographischen Protokoll kann es sich zum Beispiel um ein so genanntes Challenge-Response Verfahren handeln. Durch das kryptographische Protokoll werden die dritten Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das so genannte Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät für ein Dokument. Das Lesegerät hat einen Sensor zur Erfassung der Anzeigevorrichtung und zur Dekodierung des digitalen Wasserzeichens zum Empfang der darin beinhalteten zweiten Daten.

Nach einer Ausführungsform der Erfindung ist das Lesegerät zur Verifikation des Dokuments mit Hilfe der von der Anzeigevorrichtung erfassten zweiten Daten ausgebildet. Beispielsweise vergleicht das Lesegerät die erfassten zweiten Daten mit einer Referenz-Information. Eine hinreichende Übereinstimmung zwischen den zweiten Daten und der Referenzinformation ist dabei eine Voraussetzung dafür, dass das Dokument als echt anerkannt wird. Nach einer Ausführungsform ist die Referenzinformation auf das Dokument sichtbar aufgebracht; insbesondere kann es sich hierbei um die Personalisierungsinformationen wie Name und Ausweisnummer handeln. Auf diese Weise werden die Personalisierungsinformationen gegen Manipulation geschützt.

Nach einer Ausführungsform der Erfindung hat das Lesegerät Mittel zur Ausführung des kryptographischen Protokolls mit Hilfe der zweiten Daten. Bei den zweiten Daten handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort weitere schutzbedürftige Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrzeugparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines Dokuments. Zur Verifikation des Dokuments wird das von der Anzeigevorrichtung wiedergegebene digitale Wasserzeichen erfasst, um die zweiten Daten zu empfangen. Die zweiten Daten werden zur Prüfung der Echtheit des Dokuments mit einer Referenzinformation verglichen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments,
- Figur 2: eine schematische Draufsicht auf eine Ausführungsform eines erfindungsgemäßen Dokuments,
- Figur 3: ein Blockdiagramm einer weiteren Ausführungsform eines erfindungsgemäßen Dokuments,
- Figur 4: ein Flussdiagram einer Ausführungsform zu Einbringung eines digitalen Wasserzeichens in ein Originalbild,
- Figur 5: ein Blockdiagramm einer weiteren Ausführungsform eines erfindungsgemäßen Dokuments,
- Figur 6: ein Flussdiagram einer weiteren Ausführungsform zu Einbringung eines digitalen Wasserzeichens in ein Originalbild.

Elemente der nachfolgenden Ausführungsformen, die einander entsprechen, sind mit denselben Bezugszeichen gekennzeichnet.

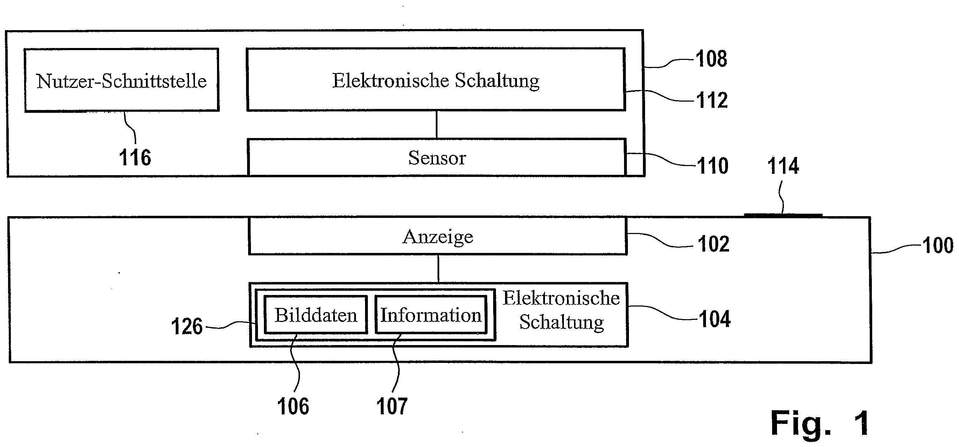

Die Figur 1 zeigt ein Dokument 100 mit einer in den Dokumentenkörper des Dokuments 100 integrierten Anzeige 102 und eine elektronische Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder um eine Aktiv-Matrixanzeige handeln.

Die elektronische Schaltung 104 beinhaltet ein oder mehrere elektronische Speicher 126 zur Speicherung von ersten Daten 106 und zweiten Daten 107. Die elektronische Schaltung 104 kann auf die Daten 106 und 107 zugreifen.

Zur Wiedergabe der Daten 106 und zur Ausgabe der Daten 107 über die Anzeige 102 greift die elektronische Schaltung 104 sowohl auf die Daten 106 als auch auf die Daten 107 zu. Die elektronische Schaltung 104 überlagert den ersten Daten ein digitales Wasserzeichen, welches die zweiten Daten beinhaltet.

Dies kann so erfolgen, dass die Überlagerung im Bildraum oder im Frequenzraum erfolgt. Im letzteren Fall werden die Daten 106 zunächst in die Frequenzdomäne transformiert, beispielsweise mit Hilfe einer Fourier Transformation, insbesondere einer FFT Transformation oder einer Fourier-Mellin Transformation oder einer Hough-Rough-Transformation. Das Frequenzspektrum der Daten 106 wird dann modifiziert, um die zweiten Daten in dem Frequenzspektrum zu codieren. Das modifizierte Frequenzspektrum wird dann in den Bildraum zurücktransformiert, sodass man modifizierte Daten 106 erhält, denen die Daten 107 als digitales Wasserzeichen überlagert sind. Die Daten 106 mit dem überlagerten digitalen Wasserzeichen werden dann auf der Anzeige 102 wiedergegeben, indem die elektronische Schaltung 104 die Anzeige 102 hierzu entsprechend ansteuert.

Alternativ kann so vorgegangen werden, dass die Überlagerung der Daten 106 mit dem digitalen Wasserzeichen, welches die Daten 107 beinhaltet, außerhalb des Dokuments 100 stattfindet. Die modifizierten Daten 106 mit dem bereits überlagerten digitalen Wasserzeichen werden dann in den Speicher 126 des Dokuments geschrieben. Dies ermöglicht eine einfachere Ausbildung der elektronischen Schaltung 104, da diese lediglich auf den Speicher 126 zugreifen muss, um die Anzeige 102 zur Wiedergabe der modifizierten Daten 106 anzusteuern.

Bei den Daten 106 kann es sich zum Beispiel um Bilddaten handeln. Unter "Bilddaten" werden hier Daten verstanden, die sich zur Wiedergabe auf der Anzeige 102 eignen, das heißt zum Beispiel eine digitale Fotografie, textuelle Angaben, ein Kennzeichen, insbesondere ein Kraftfahrzeugkennzeichen, oder dergleichen. Die Bilddaten können auch eine Bildsequenz beinhalten, wobei die Bildsequenz z.B. mehrere Gesichtsbilder aus verschiedenen Ansichten aufweisen kann.

Mit Hilfe dieses digitalen Wasserzeichens kann auch eine dynamische Information oder ein sequentielles Wasserzeichen übertragen werden. Dabei setzt sich die Information aus mehreren Teilinformationen zusammen, wobei z.B. jedes Bild der Bildsequenz eine solche Teilinformation trägt.

Die Daten 107 können ein oder mehrere Informationen beinhalten, wie zum Beispiel Personalisierungsinformationen, ein Sicherheitsmerkmal, einen kryptographischen Schlüssel, einen Fahrzeugparameter und/oder einen Gebührenstatus. Insbesondere kann es sich hierbei um benutzerspezifische oder kraftfahrzeugspezifische Informationen, wie zum Beispiel Informationen über den Träger des Dokuments bzw. das Kraftfahrzeug handeln und/oder Daten bezüglich der Gültigkeit des Dokuments, der ausstellenden Behörde oder dergleichen.

Das Lesegerät 108 hat einen optischen Sensor 110, wie zum Beispiel einen CCD-Sensor oder einen optischen Scanner. Der Sensor 110 ist dazu ausgebildet, die Bildwiedergabe der Anzeigevorrichtung mit dem überlagerten digitalen Wasserzeichen zu erfassen.

Der Sensor 110 ist mit einer elektronischen Schaltung 112 des Lesegeräts 108 verbunden. Durch die elektronische Schaltung 112 ist ein Dekoder implementiert. Der Dekoder dient zur Dekodierung des digitalen Wasserzeichens, um die in den zweiten Daten beinhaltete Information zu empfangen.

Das Lesegerät 108 hat ferner eine Nutzerschnittstelle 116. Alternativ oder zusätzlich kann das Lesegerät 108 auch eine Schnittstelle zu einem Computer und/oder einem Netzwerk aufweisen.

Wenn die Information durch Dekodierung des digitalen Wasserzeichens von dem Lesegerät 108 empfangen worden ist, wird die Information beispielsweise über die Nutzerschnittstelle 116 ausgegeben.

Beispielsweise handelt es sich bei der Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die über die Bildwiedergabe mit dem überlagerten digitalen Wasserzeichen von dem Lesegerät 100 empfangene Information mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Nach Erfassung des digitalen Wasserzeichens wird es mit einer in der elektronischen Schaltung 112 gespeicherten Referenzinformation verglichen. Wenn die optisch empfangene Information mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Bei der Information, die von der elektronischen Schaltung 104 über die Anzeige 102 durch ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet. Diese Information kann als Teil der Daten 106 und/oder als Teil der Daten 107 über die Anzeige 102 ausgegeben werden.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine so genannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die - je nach Ausführungsform - visuell ohne ein Lesegerät wahrnehmbar oder nicht wahrnehmbar sind.

Eine Aktualisierung des amtlichen Kennzeichens kann dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt

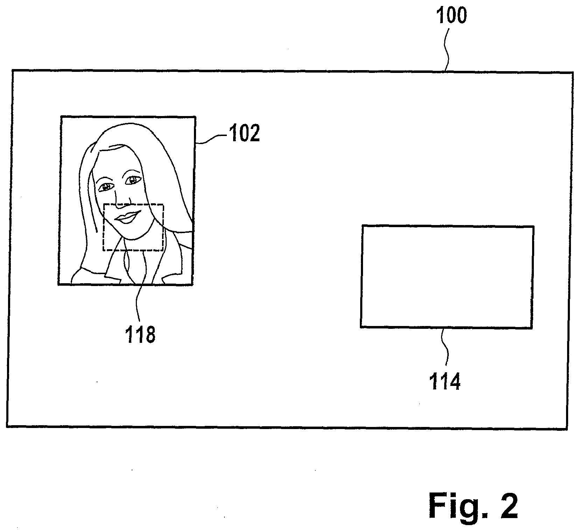

Die Figur 2 zeigt eine Draufsicht auf eine Ausführungsform des Dokuments 100. Das Dokument 100 ist hier kartenförmig ausgebildet. Die Daten 106 beinhalten bei dieser Ausführungsform ein digitales Gesichtsbild eines Trägers des Dokuments 100. Der Wiedergabe des Gesichtsbildes auf der Anzeige 102 ist nur in einem Teilbereich 118 ein digitales Wasserzeichen überlagert, welches zumindest einen Teil der in dem Aufdruck 114 beinhalteten Daten trägt. Dadurch, dass die Überlagerung mit dem digitalen Wasserzeichen nur in dem Teilbereich 118 erfolgt, wird die Fälschungssicherheit weiter erhöht, da ein Fälscher nicht wissen kann, wo sich dieser Teilbereich befindet.

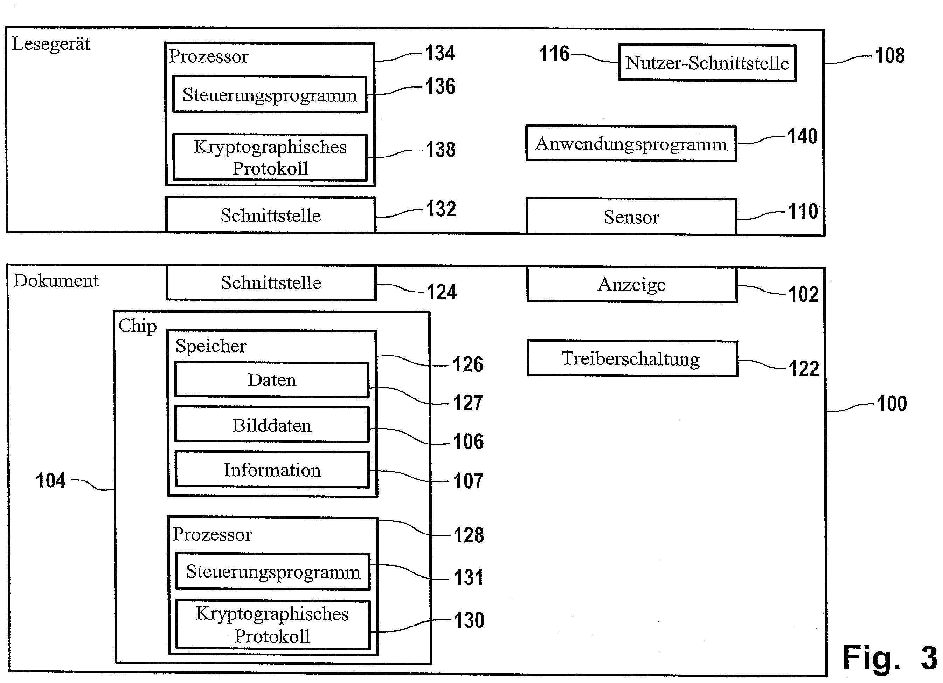

Die Figur 3 zeigt eine weitere Ausführungsform des Dokuments 100 und des Lesegeräts 108.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die z.B. in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und 107 gespeichert. Die Schaltung 104 hat ferner einen Prozessor 128 zur Ausführung von Programminstruktionen 130, durch welche die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der Bildwiedergabe der Anzeige 102. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet.

Die elektronische Schaltung 112 (vgl. Fig. 1) des Dokument 108 beinhaltet zumindest einen Prozessor 134 zur Ausführung eines Steuerungsprogramms 136 sowie von Programminstruktionen 138, durch welche die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es den Daten 106 ein digitales Wasserzeichen überlagert, welches die Daten 107 trägt. Ferner steuert das Steuerungsprogramm die Treiberschaltung 122 zur Wiedergabe der modifizierten Daten 106 mit dem überlagerten digitalen Wasserzeichen an. Beispielsweise schreibt das Steuerungsprogramm die Daten 106 mit dem überlagerten digitalen Wasserzeichen in einen Bilddatenspeicher, insbesondere einen so genannten Frame Buffer (in der Fig. 3 nicht gezeigt), auf den die Treiberschaltung dann zur zeilenweisen Ansteuerung der Anzeige 102 in einer Bildwiederholperiode zugreift.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 dekodiert das von dem Sensor 110 erfasste digitale Wasserzeichen, um so die in den Daten 107 beinhaltete Information zu empfangen. Auf diese Art und Weise erhält das Steuerungsprogramm 136 Kenntnis des kryptographischen Schlüssels.

Nach der Erfassung des kryptographischen Schlüssels aus der Bildwiedergabe startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten 127 an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

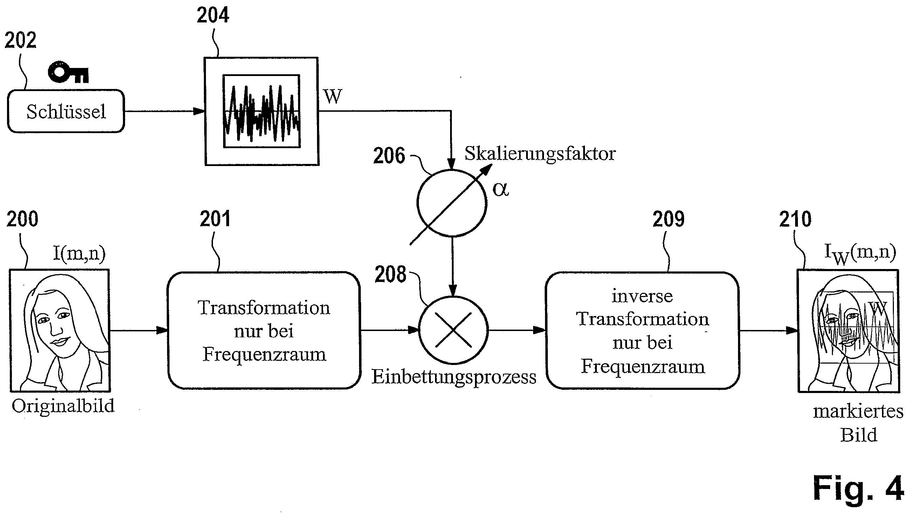

Die Figur 4 zeigt ein Flussdiagramm eines Verfahrens zur Einbringung eines digitalen Wasserzeichens W in ein Originalbild I, d.h. in die Daten 106. In dem Schritt 200 wird das Originalbild I eingegeben. Das Originalbild I hat eine Anzahl von m Spalten und n Zeilen. Ferner wird in dem Schritt 202 ein Schlüssel eingegeben. In dem Schritt 204 werden die Daten 107 in Form eines Musters eingegeben, welches das Wasserzeichen W bilden soll. Die Größe des Wasserzeichens W kann in dem nachfolgenden Schritt 206 mit Hilfe eines Skalierungsfaktors α an die Größe des Originalbilds I angepasst werden.

Zur Einbettung des Wasserzeichens W in das Originalbild I wird ein Algorithmus gestartet, der den in dem Schritt 202 eingegebenen Schlüssel als Parameter verwendet, welcher die Art und Weise der Einbettung des Wasserzeichens W in das Originalbild I bestimmt (Schritt 208). Hierzu sind geeignete Algorithmen im Stand der Technik allgemein bekannt.

Als Ergebnis wird in dem Schritt 210 das mit dem digitalen Wasserzeichen W markierte Bild I_{w} ausgegeben. Dieses markierte Bild kann in Form der modifizierten Daten 106 gespeichert werden, insbesondere in dem Speicher 126 der elektronischen Schaltung 104 (vgl. Figuren 1 und 3).

Optional kann die Einbettung des digitalen Wasserzeichens W im Frequenzraum erfolgen. Hierzu wird das Originalbild nach dem Schritt 200 in einem Schritt 201 in den Frequenzraum transformiert. Der Einbettungsprozess in dem Schritt 208 erfolgt dann bezüglich des in den Frequenzraum transformierten Originalbildes. Danach erfolgt in dem Schritt 209 eine inverse Transformation zurück in den Bildraum, bevor in dem Schritt 210 das markierte Bild ausgegeben wird.

Der in dem Schritt 202 eingegebene Schlüssel muss bei dieser Ausführungsform in dem Lesegerät 108 (vgl. Fig. 1 und 3) gespeichert werden, damit das Lesegerät das digitale Wasserzeichen wieder aus dem markierten Bild extrahieren kann. Alternativ kann der Schlüssel in einem externen Speicher gespeichert werden, z.B. auf einer Chipkarte.

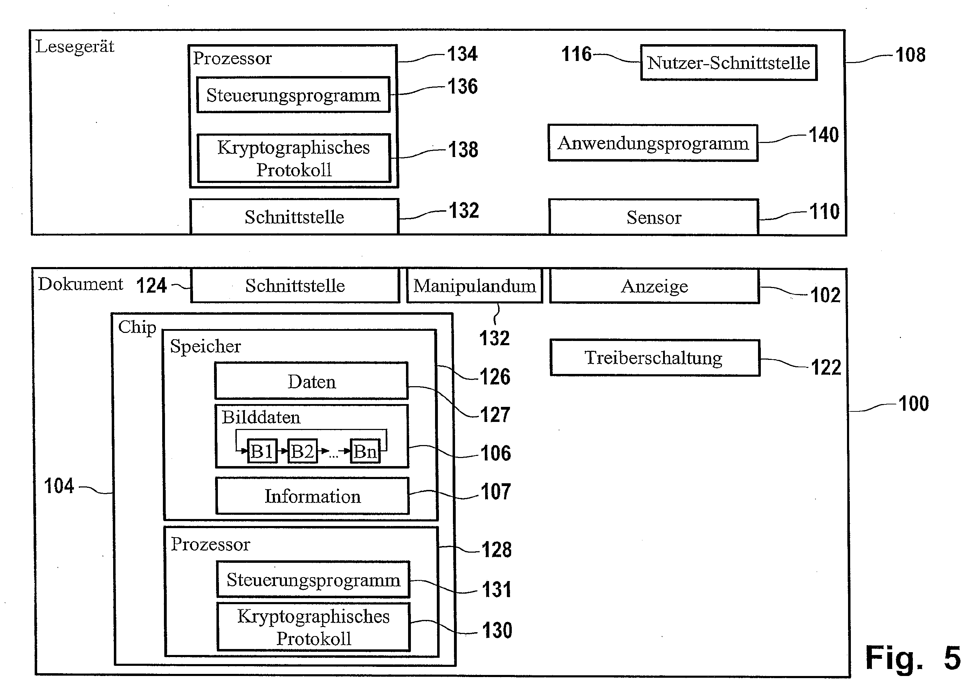

Die Figur 5 zeigt eine weitere Ausführungsform des Dokuments 100. Diese Ausführungsform unterscheidet sich von der Ausführungsform der Figur 3 insbesondere dadurch, dass die Daten 106 eine Bildsequenz bestehend aus einer Anzahl von n Bildern B1, B2, ..., Bn beinhalten.

Ferner hat das Dokument 100 ein Manipulandum 132. Bei dem Manipulandum 132 kann es sich um Betätigungselement, wie zum Beispiel ein oder mehrere Druccknöpfe oder Drehknöpfe handeln. Das Manipulandum 132 dient zur Navigation entlang der Bildsequenz, die durch die Bilddaten B1, B2, ..., Bn gegeben ist. Beispielsweise beinhaltet das Manipulandum 132 eine "vorwärts" und eine "rückwärts" Funktion, so dass ein von dem gegenwärtig auf der Anzeige 102 wiedergegebene Bild Bi ausgehend nachfolgendes Bild Bi+1 oder vorhergehendes Bild Bi-1 der Bildsequenz für die Wiedergabe auf der Anzeige 102 durch einen Benutzer ausgewählt werden kann.

Das Steuerungsprogramm 131 kann so ausgebildet sein, dass bei jedem Übergang von einem Bild der Bildsequenz zu einem anderen Bild die Information 107 für den Zeitraum Δt auf der Anzeige 102 wiedergegeben wird. Wird also beispielsweise das Bild Bi auf der Anzeige 102 wiedergegeben und betätigt der Benutzer das Manipulandum 132, um das nachfolgende Bild Bi+1 der Bildsequenz für die Wiedergabe auf der Anzeige 102 auszuwählen, so steuert das Steuerungsprogramm 131 die Treiberschaltung 122 so an, dass zunächst für den Zeitraum Δt die Daten 107 auf der Anzeige 102 wiedergegeben werden, bevor das Bild Bi+1 auf der Anzeige 102 wiedergegeben wird.

Das Steuerungsprogramm 131 kann ferner so ausgebildet sein, dass bei jeder Betätigung des Manipulandums 132 ein Trigger-Signal für das Lesegerät 108 generiert und über die Schnittstelle 124 an das Lesegerät 108 abgesendet wird, so dass die anlässlich des Wechsels der Anzeige von dem Bild Bi zu dem Bild Bi+1 erfolgende Wiedergabe der Daten 107 in Form eines digitalen Wasserzeichens durch den Sensor 110 des Lesegeräts 108 erfasst werden kann.

Bei dieser Ausführungsform werden die Daten 107, d.h. "Info gesamt" in mehrere Teilinformationen, d.h. "Info 1", "Info 2", "Info 3", ... "Info n" aufgeteilt. Jede der Teilinformationen Info i wird in ein Bild der Bildsequenz Bi eingebracht (vgl. die Ausführungsform der Figur 5 mit der Bildsequenz B1, B2, ..., Bi, ... Bn). Für die Einbringung der entsprechenden digitalen Wasserzeichen in die Bilder Bi kann jedes Mal derselbe Schlüssel verwendet werden, wie das bei der Ausführungsform der Figur 4 der Fall ist.

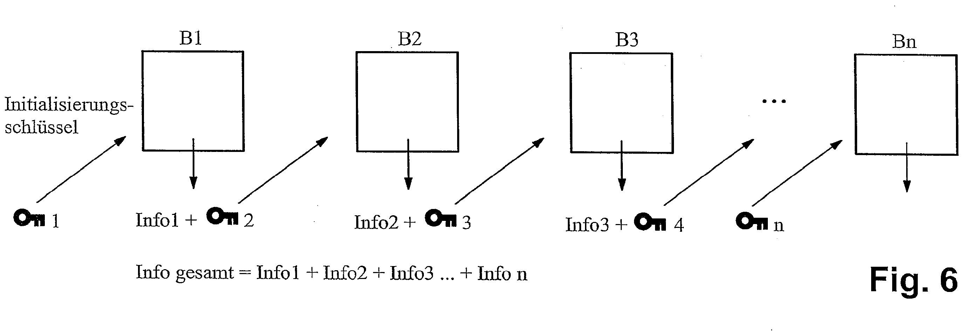

Alternativ kann so vorgegangen werden, dass jedes der digitalen Wasserzeichen mit einem anderen Schlüssel eingebracht wird, um die Sicherheit weiter zu erhöhen. Nach der Ausführungsform der Figur 6 ist es dazu nicht erforderlich, dass sämtliche dieser Schlüssel in dem Lesegerät 108 gespeichert werden müssen. Vielmehr reicht es aus, wenn in dem Lesegerät 108 ein Initialisierungsschlüssel 1 gespeichert ist. Mit Hilfe des Initialisierungsschlüssels 1 wird nämlich die Info 1 in das Bild B1 eingebracht sowie zusätzlich ein Schlüssel 2 und zwar in Form eines digitalen Wasserzeichens, wobei dies gemäß dem Verfahren nach Fig. 4 erfolgen kann.

Mit Hilfe des Schlüssels 2 wird dann ein anderes Wasserzeichen, welches die Info 2 sowie einen Schlüssel 3 trägt, in das Bild B2 eingebracht, usw. Das Lesegerät 108 (vgl. insbesondere die Ausführungsform der Figur 5) benötigt also lediglich den Initialisierungsschlüssel 1, um das digitale Wasserzeichen, welches die Info 1 und den Schlüssel 2 beinhaltet, aus dem Bild 1 B1 zu lesen. Mit Hilfe des Schlüssels 2 kann das Lesegerät 108 dann das digitale Wasserzeichen des nachfolgenden Bildes B2 der Bildsequenz lesen, welches die Info 2 sowie den Schlüssel 3 beinhaltet, usw.

Auf diese Art und Weise kann also das Lesegerät 108 sequentiell sämtliche Teilinformationen aus den Bildern B1 bis Bn der Bildsequenz lesen und erhält so insgesamt die Daten 107.

Ausführungsformen der Erfindung umfassen beispielsweise die folgenden Merkmale:
1. Dokument mit einer integrierten Anzeigevorrichtung (102), einem elektronischen Speicher zur Speicherung erster (106) und zweiter (107) Daten, und Ansteuerungsmitteln (104; 122, 131) zur Ansteuerung der Anzeigevorrichtung für eine Wiedergabe der ersten Daten mit einem digitalen Wasserzeichen, wobei das digitale Wasserzeichen die zweiten Daten beinhaltet.
2. Dokument nach Anspruch 1, wobei die Wiedergabe des digitalen Wasserzeichens nur in einem Teilbereich (118) der Anzeigevorrichtung erfolgt.
3. Dokument nach Anspruch 1 oder 2, wobei die Ansteuerungsmittel so ausgebildet sind, dass die Überlagerung der Wiedergabe der ersten Daten mit dem digitalen Wasserzeichen im Bildraum erfolgt.
4. Dokument nach Anspruch 1, 2 oder 3, wobei die Ansteuerungsmittel so ausgebildet sind, dass die Überlagerung der Wiedergabe der ersten Daten mit dem digitalen Wasserzeichen im Frequenzraum erfolgt.
5. Dokument nach einem der vorhergehenden Ansprüche, wobei es sich bei dem elektronischen Speicher um einen Bilddatenspeicher handelt, der modifizierte erste Daten beinhaltet, die durch Überlagerung der ersten Daten mit dem die zweiten Daten beinhaltenden digitalen Wasserzeichen erzeugt worden sind.
6. Dokument nach einem der vorhergehenden Ansprüche, wobei die zweiten Daten in dem elektronischen Speicher zeitlich veränderlich sind.
7. Dokument nach einem der vorhergehenden Ansprüche, wobei die zweiten Daten eine Personalisierungsinformation, ein Sicherheitsmerkmal und/oder einen kryptographischen Schlüssel beinhalten.
8. Dokument nach einem der vorhergehenden Ansprüche, mit einem geschützten Speicherbereich zur Speicherung weiterer Daten (127) und mit Mitteln (130) zur Ausführung eines kryptographischen Protokolls und mit einer Schnittstelle (124) zu einem Lesegerät (108), wobei ein Zugriff des Lesegeräts auf die weiteren Daten über die Schnittstelle die Ausführung des kryptographischen Protokolls mit Hilfe eines in den zweiten Daten beinhalteten oder aus diesen ableitbaren kryptographischen Schlüssels voraussetzt.
9. Dokument nach einem der vorhergehenden Ansprüche, wobei die ersten Daten eine Bildsequenz beinhalten, und wobei jedes Bild der Bildsequenz ein digitales Wasserzeichen trägt, welches einen Teil der zweiten Daten (107) beinhaltet.
10. Dokument nach Anspruch 9, wobei jedes Bild der Bildsequenz mit Ausnahme des letzten Bildes der Bildsequenz in seinem digitalen Wasserzeichen einen Schlüssel (2, 3, 4, ...n) zum Lesen des digitalen Wasserzeichens eines nachfolgenden Bildes der Bildsequenz trägt.
11. Dokument nach einem der vorhergehenden Ansprüche, wobei es sich um ein Wert- oder Sicherheitsdokument, insbesondere um ein Ausweisdokument oder ein Kennzeichen handelt.
12. Dokument nach einem der vorhergehenden Ansprüche, mit einer Schnittstelle, wobei die Schnittstelle zum Empfang einer auf der Anzeigevorrichtung wiederzugebenden Information ausgebildet ist.
13. Dokument nach Anspruch 12, wobei die Schnittstelle zum Empfang der Information von einem Kraftfahrzeug-Elektronikgerät ausgebildet ist, wobei es sich bei der Information um ein Kennzeichen eines Fahrzeugs, um einen Fahrzeugparameter und/oder einen Gebührenstatus handelt.
14. Dokument nach einem der vorhergehenden Ansprüche, wobei es sich bei den ersten Daten (106) um ein Kennzeichen eines Fahrzeugs und bei den zweiten Daten (107) um einen Fahrzeugparameter und/oder einen Gebührenstatus handelt.
15. Lesegerät für ein Dokument nach einem der vorhergehenden Ansprüche, mit Mitteln (110, 134, 136) zur maschinellen Erfassung des digitalen Wasserzeichens zum Empfang der zweiten Daten.
16. Lesegerät nach Anspruch 15, wobei die Mitteln (110, 134, 136) zur maschinellen Erfassung des digitalen Wasserzeichens zum Zugriff auf einen Schlüssel zum Lesen des digitalen Wasserzeichens ausgebildet sind.
17. Lesegerät nach Anspruch 16, wobei der Schlüssel in dem Lesegerät gespeichert ist.
18. Lesegerät nach Anspruch 16, wobei der Schlüssel in einer Chipkarte gespeichert ist.
19. Lesegerät nach Anspruch 16, 17 oder 18, wobei der Schlüssel aus dem digitalen Wasserzeichen gelesen wird.
20. Lesegerät nach einem der vorhergehenden Ansprüche 15 bis 19, mit Mitteln (136) zur Verifikation des Dokuments mit Hilfe der von der Anzeigevorrichtung erfassten zweiten Daten.
21. Lesegerät nach einem der vorhergehenden Ansprüche 15 bis 20, mit Mitteln (138) zur Ausführung eines kryptographischen Protokolls und einer Schnittstelle (132) zur Kommunikation mit dem Dokument, wobei ein Zugriff auf die weiteren Daten (127) des Dokuments voraussetzt, dass das kryptographische Protokoll mit Hilfe der zweiten Daten erfolgreich durchgeführt worden ist.
22. Verfahren zur Verifikation eines Dokuments nach einem der Ansprüche 1 bis 14, mit folgenden Schritten:
   - maschinelle Erfassung des digitalen Wasserzeichens zum Empfang der zweiten Daten,
   - Vergleich der zweiten Daten mit einer Referenz-Information (114).

### Bezugszeichenliste

- 1: Initialisierungsschlüssel
- 2: Schlüssel
- 3: Schlüssel
- 4: Schlüssel
- 100: Dokument
- 102: Anzeige
- 104: Schaltung
- 106: Daten
- 107: Daten
- 108: Lesegerät
- 110: Sensor
- 112: Schaltung
- 114: Aufdruck
- 116: Nutzerschnittstelle
- 118: Teilbereich
- 122: Treiberschaltung
- 124: Schnittstelle
- 126: Speicher
- 127: Daten
- 128: Prozessor
- 130: Programminstruktionen
- 131: Programminstruktionen
- 132: Manipulandum
- 134: Prozessor
- 136: Steuerungsprogramm
- 138: Programminstruktionen
- 140: Anwendungsprogramm

## Patentansprüche

1. Dokument mit einer integrierten Anzeigevorrichtung (102), einem elektronischen Speicher zur Speicherung erster (106) und zweiter (107) Daten, und Ansteuerungsmitteln (104; 122, 131) zur Ansteuerung der Anzeigevorrichtung für eine Wiedergabe der ersten Daten mit einem digitalen Wasserzeichen, wobei das digitale Wasserzeichen die zweiten Daten beinhaltet, wobei die ersten Daten eine Bildsequenz beinhalten, und wobei jedes Bild der Bildsequenz ein digitales Wasserzeichen trägt, welches einen Teil der zweiten Daten (107) beinhaltet, wobei jedes Bild der Bildsequenz mit Ausnahme des letzten Bildes der Bildsequenz in seinem digitalen Wasserzeichen einen Schlüssel (2, 3, 4, ...n) zum Lesen des digitalen Wasserzeichens eines nachfolgenden Bildes der Bildsequenz trägt.

2. Dokument nach Anspruch 1, wobei die Wiedergabe des digitalen Wasserzeichens nur in einem Teilbereich (118) der Anzeigevorrichtung erfolgt.

3. Dokument nach Anspruch 1 oder 2, wobei die Ansteuerungsmittel so ausgebildet sind, dass bei der Wiedergabe der ersten Daten die Überlagerung mit dem digitalen Wasserzeichen im Bildraum erfolgt.

4. Dokument nach Anspruch 1 oder 2, wobei die Ansteuerungsmittel so ausgebildet sind, dass bei der Wiedergabe der ersten Daten die Überlagerung mit dem digitalen Wasserzeichen im Frequenzraum erfolgt.

5. Dokument nach einem der vorhergehenden Ansprüche, wobei es sich bei dem elektronischen Speicher um einen Bilddatenspeicher handelt, der modifizierte erste Daten beinhaltet, die durch Überlagerung der ersten Daten mit dem die zweiten Daten beinhaltenden digitalen Wasserzeichen erzeugt worden sind.

6. Dokument nach einem der vorhergehenden Ansprüche, wobei die zweiten Daten in dem elektronischen Speicher zeitlich veränderlich sind.

7. Dokument nach einem der vorhergehenden Ansprüche, wobei die zweiten Daten eine Personalisierungsinformation, ein Sicherheitsmerkmal und/oder einen kryptographischen Schlüssel beinhalten.

8. Dokument nach einem der vorhergehenden Ansprüche, mit einem geschützten Speicherbereich zur Speicherung weiterer Daten (127) und mit Mitteln (130) zur Ausführung eines kryptographischen Protokolls und mit einer Schnittstelle (124) zu einem Lesegerät (108), wobei ein Zugriff des Lesegeräts auf die weiteren Daten über die Schnittstelle die Ausführung des kryptographischen Protokolls mit Hilfe eines in den zweiten Daten beinhalteten oder aus diesen ableitbaren kryptographischen Schlüssels voraussetzt.

9. Dokument nach einem der vorhergehenden Ansprüche, wobei es sich um ein Wert- oder Sicherheitsdokument, insbesondere um ein Ausweisdokument oder ein Kennzeichen handelt.

10. Dokument nach einem der vorhergehenden Ansprüche, mit einer Schnittstelle, wobei die Schnittstelle zum Empfang einer auf der Anzeigevorrichtung wiederzugebenden Information ausgebildet ist.

11. Dokument nach Anspruch 10, wobei die Schnittstelle zum Empfang der Information von einem Kraftfahrzeug-Elektronikgerät ausgebildet ist, wobei es sich bei der Information um ein Kennzeichen eines Fahrzeugs, um einen Fahrzeugparameter und/oder einen Gebührenstatus handelt.

12. Dokument nach einem der vorhergehenden Ansprüche, wobei es sich bei den ersten Daten (106) um ein Kennzeichen eines Fahrzeugs und bei den zweiten Daten (107) um einen Fahrzeugparameter und/oder einen Gebührenstatus handelt.

13. Dokument nach Anspruch 1, mit einem Manipulandum (132), vorzugsweise einem oder mehrerer Druckknöpfe oder Drehknöpfe, zum Navigieren entlang der Bildsequenz.

14. Dokument nach Anspruch 13, bei dem das Manipulandum (132) eine "Vorwärts"- und eine "Rückwärts"-Funktion aufweist, sodass ein von dem gegenwärtig auf der Anzeigevorrichtung (102) wiedergegebenen Bild (Bi) ausgehend nachfolgendes Bild (Bi + 1) oder vorhergehendes Bild (Bi - 1) der Bildsequenz für eine Wiedergabe auf der Anzeigevorrichtung (102) durch einen Benutzer auswählbar ist.

15. Dokument nach Anspruch 14, wobei ein Steuerprogramm (131) der Ansteuerungsmittel bewirkt, dass bei jedem Übergang von einem Bild der Bildsequenz zu einem anderen Bild eine Anzeige der in den Daten beinhalteten Information (107) für einen vorbestimmten Zeitraum Δt wiedergegeben wird.

16. Dokument nach Anspruch 14, mit einer Schnittstelle (124) zu einem externen Lesegerät (108), wobei ein Steuerprogramm (131) der Ansteuerungsmittel bewirkt, dass bei jeder Betätigung des Manipulandums (132) ein Trigger-Signal für das Lesegerät generiert wird und über die Schnittstelle (124) an das Lesegerät (108) abgesendet wird.

17. Lesegerät für ein Dokument nach einem der vorhergehenden Ansprüche, mit Mitteln (110, 134, 136) zur maschinellen Erfassung des digitalen Wasserzeichens zum Empfang der zweiten Daten.

18. Lesegerät nach Anspruch 17, wobei die Mitteln (110, 134, 136) zur maschinellen Erfassung des digitalen Wasserzeichens zum Zugriff auf einen Initialisierungsschlüssel (1) zum Lesen des in das erste Bild (B1) eingebrachten digitalen Wasserzeichens ausgebildet sind.

19. Lesegerät nach Anspruch 18, wobei jeder Schlüssel zum Lesen eines weiteren Bildes neben dem ersten Bild (B1) aus dem digitalen Wasserzeichen des vorangehenden Bildes gelesen wird.

20. Lesegerät nach Anspruch 19 für ein Dokument nach Anspruch 16 und mit einem Sensor (110), wobei das Lesegerät ausgelegt ist, ein über die Schnittstelle (124) an das Lesegerät (108) abgesendetes Trigger-Signal zu empfangen, um die anlässlich des Wechsels der Anzeige von dem Bild Bi zu dem nachfolgenden Bild Bi+1 erfolgende Wiedergabe der zweiten Daten (107) in Form eines digitalen Wasserzeichens durch den Sensor (110) zu erfassen.

21. Lesegerät nach einem der vorhergehenden Ansprüche 17 bis 20, mit Mitteln (136) zur Verifikation des Dokuments mit Hilfe der von der Anzeigevorrichtung erfassten zweiten Daten.

22. Lesegerät nach einem der vorhergehenden Ansprüche 17 bis 21, mit Mitteln (138) zur Ausführung eines kryptographischen Protokolls und einer Schnittstelle zur Kommunikation mit dem Dokument, wobei ein Zugriff auf die weiteren Daten (127) des Dokuments voraussetzt, dass das kryptographische Protokoll mit Hilfe der zweiten Daten erfolgreich durchgeführt worden ist.

23. Verfahren zur Verifikation eines Dokuments nach einem der Ansprüche 1 bis 16, mit folgenden Schritten:
- maschinelle Erfassung des digitalen Wasserzeichens jedes Bildes der Bildsequenz zum Empfang der zweiten Daten,
- Vergleich der zweiten Daten mit einer Referenz-Information (114).
